# EUROPEAN PATENT APPLICATION

(11) **EP 4 349 167 A1**
(43) Date of publication of application: **10.04.2024**
(21) Application number: 23201478.7
(22) Date of filing: 03.10.2023
(51) Int. Cl.: A01M 1/02, A01M 1/10, A01M 1/20

(54) **PREVENTION PROCEDURE FOR THE CONTROL AND MANAGEMENT OF THE DIFFUSION OF AT LEAST ONE ENTOMOLOGICAL INFESTANT SPECIES**

(30) Priority: 03.10.2022 IT 202200020283
(71) Applicant: Scapini, Cristiano, 37060 Sona (VR) (IT)
(72) Inventor: SCAPINI, Cristiano, 37060 Sona (VR) (IT)
(74) Representative: Anselmi, Davide

(57) **Abstract**

A preventive procedure for the control and management of the diffusion of at least one entomological infestant species comprises the following steps: identifying at least one entomological species it is intended to eliminate from a territory; identifying on the territory an area of intervention having a pre-established surface extent in which one or more plants of at least one plant species (A) palatable for the entomological species are present and/or can be planted in order to create an area favourable to the settlement and/or feeding and/or reproduction of the entomological species; optionally planting in the area of intervention at least one plant of one or more palatable plant species (A); applying, in the area of intervention, an attractive substance suitable for attracting the entomological species to where the palatable plant species (A) is located; carrying out a trunk injection treatment with an insecticidal substance on one or more plants of the palatable plant species (A) present in the area of intervention so that the insecticidal substance is disseminated towards an epigeal part that can be assimilated by the attracted entomological species, thereby assuring the control thereof.

## Description

### Technical field

The present invention relates to a prevention procedure for the control and management of the diffusion of at least one entomological infestant species.

In particular, the invention fits into the sector of trunk injection treatments for prevention and maintenance of fruit-bearing, herbaceous and/or ornamental plants, for example trees such as cherry, peach and plum trees and/or ornamental plants such as plane, linden and birch trees.

### Prior art

In recent decades, as is well known, globalisation has facilitated and increased the exchange of goods and foods among the world's countries. However, this has led to the proliferation of "alien" insects in new environments to be colonised without any control on the part of nature (i.e. in territories where no antagonists are present).

For example, *Popillia japonica Newman,* native to Japan, is a univoltine species of scarab beetles that has spread in the regions of northern Italy.

Adults of the aforesaid beetle species appear in the summer (generally in the period of June-August), whereas the larvae manifest themselves later, in the period of September-April, and then transform into pupae in the month of May.

*Popillia japonica Newman* is a polyphagous insect that can feed on more than three hundred plant species, including trees and herbaceous and ornamental plants. The adult causes complete defoliation, leaving only the veins unaltered, whilst the larva, being laid in the ground, feed on roots, mainly of grasses.

This scarab beetle, which arrived in Italy in 2014, is still continuing its advance into neighbouring territories, notwithstanding the numerous containment measures adopted, such as the introduction of buffer zones and the use of mass trapping.

Today, one method of containment consists in mass traps made up of an insect collection container, which contains one or more attractive substances (generally pheromones), and a funnel through which the insects pass to reach the inside of the container but which at the same time prevents them from getting out.

However, the aforesaid mass traps pose some drawbacks, including:
- they are necessary only for monitoring the biological cycle of the insect in our areas;
- they pose difficulties in their management, as it is necessary to empty the trap every day due to the collection of numerous insects inside them;
- they pose difficulties in the disposal of the insects present inside them
- the abundant presence of insects inside the container results in the production, by the insects themselves, of alarm pheromones having the purpose of warning the insects present nearby of the presence of a danger situation.

In addition to the use of mass trapping, it is possible to use devices with specific bait for *Popillia japonica Newman,* which attract the beetle.

This specific device is made up of a tripod, in which the bait is placed in the internal part, and a net that is wrapped around the aforesaid tripod and impregnated with an insecticidal product, often belonging to the category of pyrethroids, which acts by contact.

Consequently, when the insects are attracted by the bait, they come into contact with the net treated with the insecticide, which causes first their paralysis and then their death.

However, in general, the combined use of mass trapping and traps with specific bait is not effective in reducing, or even better blocking, the advance and continual expansion of an alien insect.

### Summary

In this context, the technical task at the basis of the present invention is to propose a prevention procedure for the control and management of the diffusion of at least one entomological infestant species which overcomes the drawbacks of the abovementioned prior art.

In particular, one object of the present invention is to propose a prevention procedure for the control and management of the diffusion of at least one entomological infestant species for the antiparasitic treatment of tree species, and/or herbaceous and/or ornamental plant species which makes it possible to optimise the elimination of one or more present and future entomological species that are harmful to plant varieties. In particular, the aforesaid procedure aims to be particularly effective against alien entomological species that are harmful in that they feed on tree species, and/or herbaceous and/or ornamental plant species in a particular area.

Another object of the present invention is to provide a procedure for the antiparasitic trunk injection treatment of tree species, and/or herbaceous and/or ornamental plant species which, moreover, does not require setting up protected areas inaccessible to people.

The stated technical task and specified objects are substantially achieved by a prevention procedure for the control and management of the diffusion of at least one entomological infestant species which comprises the technical features disclosed in the independent claim. The dependent claims correspond to further advantageous aspects of the invention.

It should be appreciated that this summary introduces a selection of concepts in simplified form, which will be further elaborated on in the detailed description provided below.

The invention relates to a prevention procedure for the control and management of the diffusion of at least one entomological infestant species.

In particular, the aforesaid procedure comprises the following operating steps:
- identifying at least one entomological species, i.e. a particular insect or family of insects, which it is intended to eliminate from a territory;
- identifying on the territory an area of intervention having a pre-established surface extent in which one or more plants of at least one plant species palatable for the entomological species are present and/or can be planted in order to define an area favourable to the settlement and/or feeding and/or reproduction of the same entomological species;
- optionally planting in the area of intervention at least one plant of one or more plant species palatable for the entomological species;
- applying in the area of intervention an attractive substance, preferably a pheromone/kairomone, suitable for attracting the entomological species to where the palatable plant species is located;
- carrying out an antiparasitic trunk injection treatment with an insecticidal substance on one or more plants of at least one palatable plant species present in the area of intervention, so that the insecticidal substance is disseminated towards an epigeal part that can be assimilated by the entomological species attracted into the area of intervention by the duly applied attractive substance.

In other words, in accordance with one aspect of the invention, the aforesaid procedure comprises identifying or creating a "comfort zone" into which an insect (belonging to the entomological species it is intended to eliminate from the territory) is attracted thanks to the use of a specific sexual pheromone. Therefore, only male individuals mature for mating will be attracted into the area of intervention, where they will find an environment favourable to their settlement and free nourishment (thanks to the presence of plant species palatable to them). The aforesaid "comfort zone" will preferably be composed of different tree specimens palatable to the entomological species to be combatted, which, by feeding on their foliage, previously treated by trunk injection of suitable insecticidal products, will rapidly die.

Advantageously, therefore, the aforesaid procedure is able to ensure the following advantages:
- attracting insects of the entomological species to be eliminated into a specific area, which is suitably selected (above all from the standpoint of its geolocation) and preferably far from the place of greatest infestation so as to reduce any problems;
- the insects attracted by the attractive substance will thus feed on the leaves (i.e. the epigeal parts) of the plant varieties (i.e. the plants) disposed in proximity to the attractive substance and will be eliminated;
- the products used do not require the creation of areas inaccessible to users, who may rather safely approach the treated plant varieties. In other words, the insecticidal substance is not applied on the surface of the plants - as is normally the case in accordance with the prior art - but rather inside them by injection (i.e. trunk injection). Therefore, the insecticidal substance cannot be involuntarily assimilated by people standing in proximity to the plants treated by trunk injection and thus does not require the creation of a safety perimeter to prevent access to people around the treated plants; moreover, it has a prolonged effect, lasting at least one year;
- the creation of an environment favourable to the settlement of the insect, which can freely feed on the plants treated by trunk injection with insecticidal substances. The insect's death will occur suddenly and in a manner that is apparently natural for the insect itself, which will thus not be induced to emit any alarm pheromone serving to warn the other insects of the species - as occurs, by contrast, in the known mass traps.

One possible operational application of the aforesaid procedure for antiparasitic treatment by trunk injection provides for the creation of an area planted with trees (avenue, city park, woods, etc.) in which one or more plant varieties are present. Within the area planted with trees, therefore, one or more attractive substances, for example scents or pheromones/kairomones, can be provided with the aim of attracting one or more species of alien insects which must be removed from population centres and/or farmland, in order to be able to eliminate them by exploiting the fact that the plants in the area planted with trees, in particular ones palatable for each entomological species, have been treated by trunk injection with a harmful substance. In fact, by feeding on the leaves of the plants treated by trunk injection, the insects will assimilate the harmful substance and die. Advantageously, the attractive substance can be disposed in at least one luring device (for example, a dispenser that does not act as a trap) suitably positioned in the area of intervention and/or near the same palatable plant species making up at least part of the aforesaid area planted with trees.

In this manner, the procedure is capable of countering the proliferation of alien entomological species (harmful to the flora and/or the territory) that have no natural hindrance by other species antagonistic to them.

In conclusion, the prevention strategy deriving from the aforesaid procedure makes it possible to control and manage the populations of an entomological species in a given territory, even a very vast one, by treating only a relatively small number of trees making up the various "comfort zones".

### Brief description of the drawings

Additional features and advantages of the present invention will emerge more clearly from the approximate, and thus non-limiting, description of a preferred but not exclusive embodiment of a procedure for antiparasitic trunk injection treatment of tree species, and/or herbaceous and/or ornamental plant species as illustrated in the appended drawings, in which:
- figure 1 illustrates, according to a schematic view, the sequence of steps of the procedure for the antiparasitic trunk injection treatment;
- figure 2 schematically illustrates a possible example of application of the procedure in accordance with the invention;
- figure 3 is a photograph representative of the positioning of the luring device among the possible tree varieties;
- figures 4 to 6 are photographs representative of the sequence of steps of the trunk injection treatment.

With reference to the drawings, they serve solely to illustrate embodiments of the invention with the aim of better clarifying, in combination with the description, the inventive principles underlying the invention.

### Detailed description of at least one embodiment

The present invention relates to a prevention procedure for the control and management of the diffusion of at least one entomological infestant species.

Any modifications or variants which, in the light of the description, are evident to the person skilled in the art must be considered to fall within the scope of protection established by the present invention, according to considerations of technical equivalence.

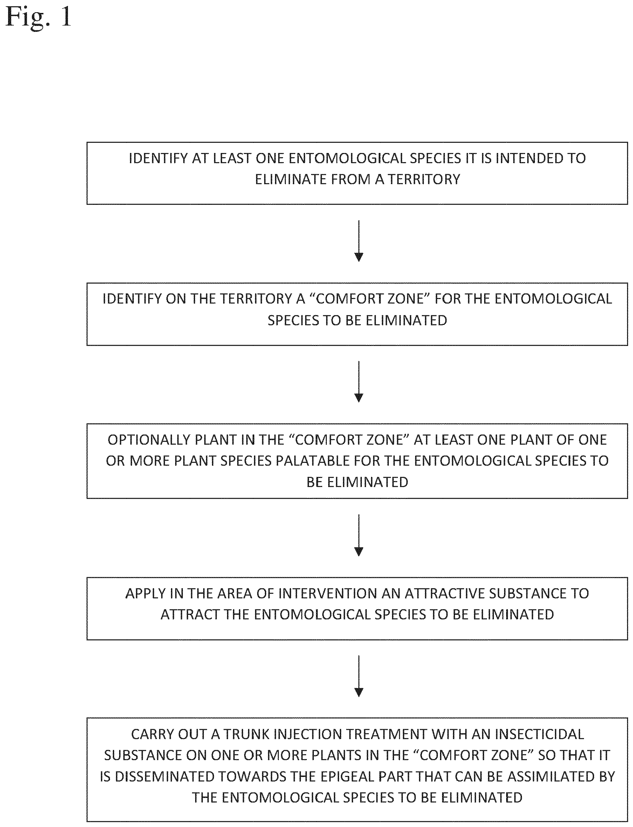

Figure 1 shows the sequence of steps of a prevention procedure for the control and management of the diffusion of at least one entomological infestant species.

In particular, the aforesaid procedure comprises the following steps:
- identifying at least one entomological species, i.e. a particular insect or family of insects, it is intended to eliminate from a territory;
- identifying within the territory an area of intervention Z having a pre-established surface extent in which one or more plants of at least one plant species A palatable for the entomological species are present and/or can be planted so as to define an area ("comfort zone") favourable to the settlement and/or feeding and/or reproduction of the same entomological species;
- optionally planting in the area of intervention at least one plant of one or more plant species A palatable for the entomological species;
- applying in the area of intervention Z an attractive substance, preferably a pheromone, suitable for attracting the entomological species in proximity to the palatable plant species A;
- performing an antiparasitic trunk injection treatment with an insecticidal substance on one or more plants of at least one palatable plant species A present in the area of intervention Z so that the insecticidal substance is disseminated, in a lasting manner over time (at least one year), towards an epigeal part that can be assimilated by the entomological species attracted into the area of intervention Z by the duly applied attractive substance.

In other words, in order to resolve the problems of the prior art and obtain further advantages, the aforesaid procedure comprises attracting the insects of one or more entomological species it is intended to eliminate thanks to a suitable positioning of a pheromone or another attractive substance in an area appealing to the insects themselves by virtue of the presence plants that are palatable (i.e. conducive to the settlement, and/or feeding and/or reproduction) for the insects of one or more entomological species it is intended to eliminate.

In accordance with one possible aspect of the invention, the attractive substance is positioned in a special dispenser which, therefore, does not perform the task of capturing the insects like a trap. The adult males are in fact attracted into a comfort zone where the dispenser is positioned and where, in addition, there are a number of trees palatable for the same adult male parasites and on which an insecticidal substance has been duly applied by means of a trunk injection treatment.

Consequently, the male insects will go to feed on these treated trees, and thus be rapidly eliminated.

In this manner, the procedure in accordance with the invention allows the following advantages to be obtained:
- the attractive substance (possibly placed inside a dispenser) makes it possible to attract the insects into an area identified beforehand as suitable, preferably far from the place of greatest infestation;
- the specimens of the entomological species it is desired to eliminate are attracted by the pheromone and feed on the leaves of the nearby plants previously treated by trunk injection ;

- after ingesting the epigeal parts treated with the insecticidal product, the insects are destined to die rapidly;
- there is no need to create a worksite around the plant species treated with the insecticidal substance, since the latter are treated by trunk injection. In other words, the insecticidal substance is injected into the trunk of the plant and is thus not dispersed into the environment and creates no danger of contact with the population. Through ascending xylem vessels, the insecticidal substance is capable of reaching the foliage the insect will use to feed on, permeating it for a prolonged period of at least one year;
- once dead, the insects will fall onto the ground and will obviously no longer be able to emit the alarm pheromone to warn the other specimens of the same species. Moreover, they will be rapidly degraded by microorganisms present in the soil.

In accordance with a preferred aspect of the invention, the attractive substance is applied directly on one or more plants of at least one palatable species A.

In addition, or alternatively, the attractive substance can also be positioned in a dispenser device (previously mentioned) that may be positioned in proximity to or directly on at least one plant of at least one plant species A that is palatable for the entomological species it is intended to eliminate.

In accordance with another aspect of the invention, the insecticidal substance is applied in the area of intervention during a period of flight, and/or a period of feeding, and/or a period of reproduction of the insects belonging to at least one entomological species it is intended to eliminate from the territory.

Preferably, the insecticidal substance is applied in the area of intervention directly on at least one plant of at least one palatable plant species A.

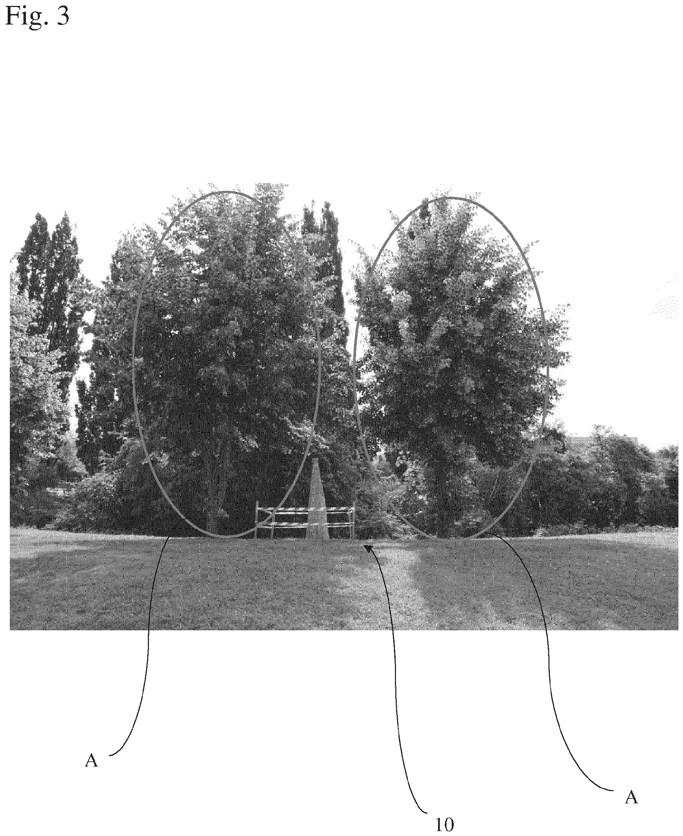

In accordance with a further aspect of the invention, the procedure also comprises a step of providing at least one luring device 10 (which may be seen in figure 3) on which it is possible to apply the attractive substance (thus defining the aforesaid dispenser device) and/or the insecticidal substance.

In particular, the positioning of the luring device 10 provides for the possibility of exploiting the presence of plants A palatable for the entomological species to be eliminated. Such plants, as mentioned earlier, are advantageously treated beforehand with an insecticidal trunk injection substance, thus making it possible to kill the insects to be eliminated which feed on the leaves or the epigeal part of the aforesaid plant.

Therefore, upon feeding on the aforesaid treated epigeal part, the insects are poisoned and eliminated.

Preferably, the procedure comprises using the luring device 10 solely for the application of the attractive substance so that the latter acts as a dispenser device suitable for attracting at least one entomological species it is intended to eliminate.

In accordance with one aspect of the invention, the step of selecting an area of intervention comprises identifying an area of intervention far away from an area of greater infestation so as to attract the entomological species to be eliminated where it is present in a smaller quantity.

Advantageously, positioning possible luring devices 10, applying the attractive substances and performing an antiparasitic trunk injection treatment with an insecticidal substance makes it possible to attract the entomological species to be eliminated into areas of intervention selected beforehand in order to avoid allowing them to continue to cause damage in the more highly infested areas.

In accordance with one aspect of the invention illustrated in figure 3, the luring device 10 is positioned in proximity to at least one palatable plant species A and at least one respective entomological species to be eliminated.

In this manner, one maximises the possibility that the insects to be eliminated, when feeding, come into contact with the insecticidal substance used during the trunk injection treatment of the plant that is particularly palatable to them.

Advantageously, the attractive substance applied on the luring device 10 comprises a pheromone suitable for attracting in particular the adult and/or male specimens of the insect to be eliminated.

The luring device 10 could be used with a plurality of attractive substances (scents, pheromones, kairomones) so as to be effective against various entomological species it is intended to eliminate.

Advantageously, as the treatment applied on the plant varieties is a trunk injection treatment, it is not necessary to create a worksite, since the insecticidal substance is not dispersed into the environment and, consequently, does not come into contact with the population that habitually frequents the park/garden in which the plant varieties subjected to the trunk injection treatment are present; moreover, the persistence of the injected product assures a lasting effectiveness over time (at least 12 months). Generally, the most palatable plant species, in particular for the scarab beetle *Popillia japonica Newman,* are cherry, peach and plum trees and ornamental plants such as plane, linden and birch trees.

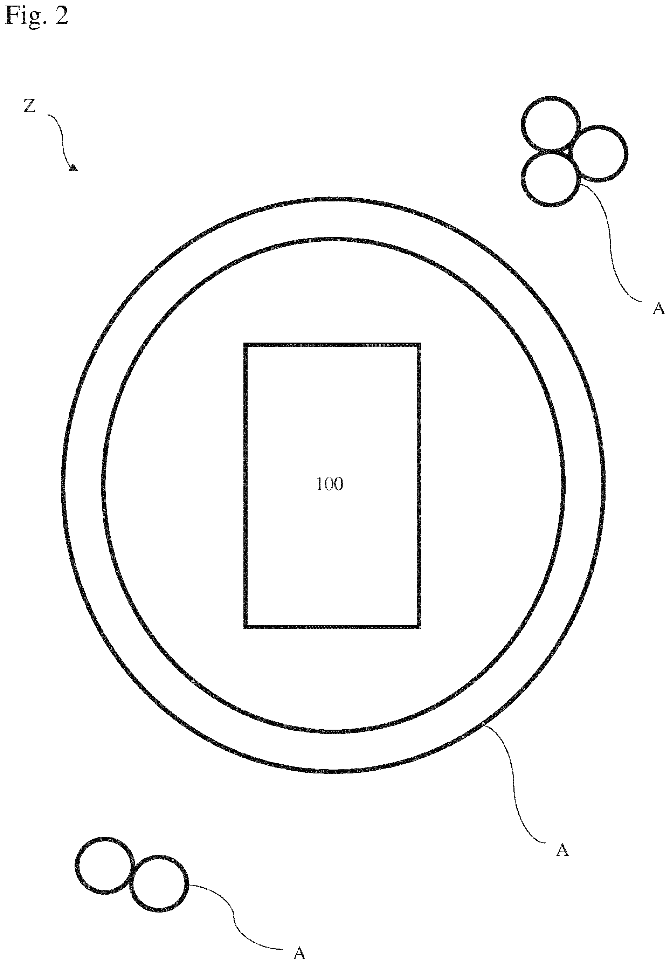

Figure 2 shows a possible example embodiment of the innovative procedure described. In particular, figure 2 is a schematic illustration of an airport 100 viewed from above. Globalisation has facilitated and increased the exchange of goods and foods among the world's countries. Consequently, airports, but in general places where foreign goods are stored, can prove to be areas of introduction of alien entomological species, which have arrived in that territory via foreign cargo carried by airplanes. In other words, usually in airports, there can be a high rate of alien entomological species which proliferate and subsequently expand into neighbouring territories in quest of food and places conducive to settlement and reproduction.

As may be seen in figure 2, the procedure in accordance with the invention comprises creating and/or identifying areas of intervention neighbouring airports in which plant species palatable for the alien entomological species it is intended to eliminate are present or are planted. Thanks to the application of attractive substances, for example pheromones/kairomones, the insects of the aforesaid entomological species are even more easily led to migrate towards the palatable plant species A. The area of intervention populated with those palatable plant species A will thus define a so-called "comfort zone" in which the insects will remain willingly at least to feed on the epigeal parts of the aforesaid plants. Advantageously, such plants are treated beforehand by trunk injection with an insecticidal substance so that the latter reaches the foliage the insects will use as a source of food. It thus follows that the assimilation of leaves by the insects will result in their sudden and (almost) immediate death, without them being able to produce any alarm pheromone with which to warn other insects of their kind.

In particular, therefore, the procedure makes it possible to draw at least one entomological species of interest from a highly populated area (i.e. an airport in accordance with the previous example) voluntarily towards an area of intervention Z that is sufficiently far away and treated beforehand (by trunk injection) with an insecticidal substance for eliminating the same insects.

Preferably, as shown in figure 3, the luring device 10 is positioned between at least a couple of plant species A palatable to the entomological species to be eliminated. These plant species are circled to make them more evident. The luring device 10 may be seen between them.

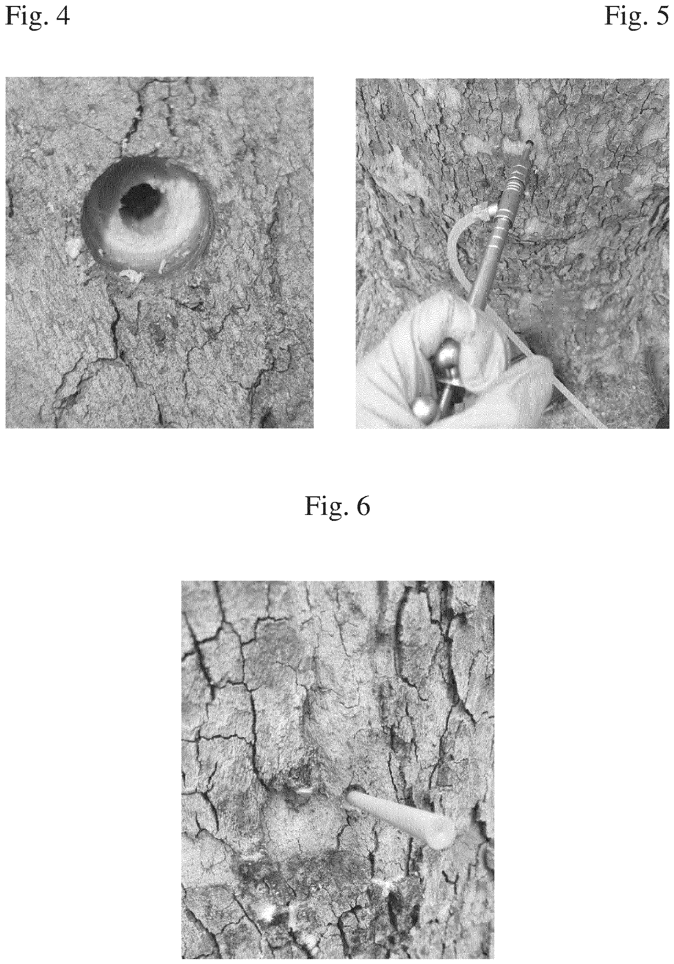

Figures 4-6 illustrate the various sub-steps of the step of performing an antiparasitic trunk injection treatment. In particular, the step of performing a trunk injection treatment comprises the following sub-steps:
- drilling at least one hole into the trunk of the plant species A palatable to the entomological species to be eliminated until reaching the xylem;
- injecting a pre-established quantity of a trunk injection substance through the aforesaid hole;
- disinfecting the tools used for the drilling and injection with a quaternary ammonium salt-based solution;
- plugging each hole drilled into the trunk of the plant species.

Figure 4 illustrates the drilling step which, by means of a particular tool made up of two concentric bits, allows for drilling holes with a diameter ranging between 0.5 millimetres and 4 millimetres with a respective area of bark removal with a diameter ranging between 5 and 9 centimetres. Preferably, the hole extends to a maximum depth of 7 centimetres.

The drilling operation is preferably carried out using an electric drill with a low number of revolutions per minute. The hole is made at a distance from the collar ranging between 50 and 120 centimetres. The number of holes per plant varies based on the trunk diameter of the plant itself, the number of branches and the physiological characteristics of the plant. The holes are normally drilled at the same height and, moreover, at a distance of at least 30 - 50 centimetres from one another. Preferably, the drilling takes place in a radial direction, orthogonally to the trunk of the plant subjected to treatment.

Generally, the holes are drilled into healthy parts of the trunk of the plant, in which no symptoms of cambium impairment are present. The number of points of administration is determined based on the principle of least invasiveness.

The choice of the diameter size of the drill bits and thus the size of the hole that will be drilled follow the same principle.

Figure 5 illustrates the step of injecting the insecticidal substance by means of the trunk injection technique.

Preferably, the injection takes place manually using a particular syringe which enables the operator to assist the natural absorption of the tree subjected to treatment. The injection pressure is very low and corresponds to the pushing of a hand (generally less than 2 bar). The special syringe is provided with specific interchangeable needles and is moreover fitted with a tube connected to a reservoir with a capacity of about one litre containing the insecticidal substance, which also includes a plant protection product. The plugging step is preceded by a disinfection step, during which the drill bits and all the parts of the equipment used and coming into contact with the tissues of the plant (for example the xylem) are duly disinfected with a quaternary ammonium salt-based solution to prevent the diffusion of pathogens.

Finally, Figure 6 illustrates the plugging step, wherein at the end of the trunk injection treatment procedure, a special cone made of biologically degradable corn starch suitable for acting as a plug is applied on the treated plant.

## Claims

1. A prevention procedure for the control and management of the diffusion of at least one entomological infestant species, comprising the following steps:
- identifying at least one entomological species it is intended to eliminate from a territory;
- identifying on the territory an area of intervention having a pre-established surface extent in which one or more plants of at least one plant species (A) palatable for said at least one entomological species are present and/or can be planted, said area of intervention comprising at least one palatable plant species (A) defining an area favourable to the settlement and/or feeding and/or reproduction of said at least one entomological species;
- optionally planting in said area of intervention at least one plant of one or more plant species palatable (A) for said at least one entomological species;
- applying, in said area of intervention, an attractive substance, preferably a pheromone and/or a kairomone, suitable for attracting said at least one entomological species to where said at least one palatable plant species (A) is located;
- carrying out an antiparasitic trunk injection treatment with an insecticidal substance on one or more plants of at least one palatable plant species (A) present in said area of intervention so that said insecticidal substance is disseminated towards an epigeal part that can be assimilated by said at least one entomological species attracted into said area of intervention by said attractive substance.

2. The procedure according to claim 1, wherein said attractive substance is applied directly on one or more plants of said at least one palatable species (A).

3. The procedure according to claim 1 or 2, wherein said step of identifying an area of intervention comprises identifying an area of intervention far from an area of greater infestation so as to attract the entomological species to be eliminated where it is present in a smaller quantity.

4. The procedure according to any preceding claim, wherein said insecticidal substance is applied in said area of intervention directly on at least one plant of at least one palatable plant species (A).

5. The procedure according to any preceding claim, wherein said insecticidal substance is applied in said area of intervention during a period of flight, and/or a period of feeding, and/or a period of reproduction of the insects belonging to said at least one entomological species it is intended to eliminate dal territory.

6. The procedure according to any preceding claim, comprising a step of providing at least one luring device (10) on which said attractive substance can be applied.

7. The procedure according to claim 6, wherein said luring device (10) is positioned in proximity to at least one palatable plant species (A).

8. The procedure according to claim 6, wherein said luring device (10) is positioned between at least a couple of plants of at least one palatable plant species (A).

9. The procedure according to any preceding claim, wherein said step of performing a trunk injection treatment comprises the following sub-steps:
- drilling at least one hole into the trunk of the plant species (A) palatable to the entomological species to be eliminated until reaching the xylem;
- injecting a pre-established quantity of a trunk injection treatment substance through said at least one hole;
- disinfecting the tools used for the drilling and injection steps with a quaternary ammonium salt-based solution;
- plugging each hole drilled into the trunk of the plant species.
